# FASCICULE DE BREVET EUROPEEN

(11) **EP 1 893 963 B1**
(45) Date de publication et mention de la délivrance du brevet: **21.11.2012**
(21) Numéro de dépôt: 06763744.7
(22) Date de dépôt: 15.06.2006
(51) Int. Cl.: G01K 13/00, G01K 1/02, G01L 19/08, G01L 23/10, G01L 23/22

(54) **STRUCTURE DE CAPTEUR NOTAMMENT POUR UN ENVIRONNEMENT SEVERE DANS UN VEHICULE AUTOMOBILE**
SENSORSTRUKTUR INSBESONDERE FÜR EINE HARSCHE UMGEBUNG IN EINEM KRAFTFAHRZEUG
SENSOR STRUCTURE IN PARTICULAR FOR A HARSH ENVIRONMENT IN A MOTOR VEHICLE

(30) Priorité: 15.06.2005 FR 0506083
(43) Date de publication de la demande: 05.03.2008
(73) Titulaire: Commissariat à l'Énergie Atomique et aux Énergies Alternatives, 75015 Paris (FR); PEUGEOT CITROËN AUTOMOBILES S.A., 78140 Vélizy Villacoublay (FR)
(72) Inventeur: BAVOUX, Bernard, F-91440 Bures sur Yvette (FR); PAULY, Maxime, F-57310 Bertrange (FR); DANEL, Jean-Sébastien, F-38130 Echirolles (FR); ROBERT, Philippe, F-38100 Grenoble (FR)
(74) Mandataire: Ménès, Catherine
(86) Numéro de dépôt international: PCT/EP2006/063250
(87) Numéro de publication internationale: WO 2006/134151

(56) Documents cités:
- DE-A1- 4 341 903
- GB-A- 2 119 127
- US-A1- 2004 105 342

## Description

La présente invention concerne une structure de capteur notamment pour un environnement sévère dans un véhicule automobile.

Un problème principal rencontré dans ce type d'applications est de pouvoir mettre en oeuvre des mesures dans un environnement sévère, pour lesquelles les technologies classiques de capteurs ne sont pas utilisables en raison des conditions d'environnement sévères rencontrées, que celles-ci soient des conditions d'environnement thermiques, vibratoires, chimiques, etc..

Une approche utilisée jusqu'à présent pour réaliser une telle mesure dans un tel environnement difficile est de mettre en place un transducteur entre la grandeur à mesurer et le dispositif de mesure, de telle façon qu'à l'extrémité du transducteur, les conditions d'environnement soient compatibles avec la technologie du capteur.

Le transducteur a ainsi pour rôle de former un écran pour certaines composantes physiques gênantes ou incompatibles avec le capteur, tout en étant un transmetteur de la grandeur à mesurer.

Mais l'utilisation de ce transducteur présente un certain nombre d'inconvénients, notamment en raison de déformations, de perte ou d'ajout d'informations que celui-ci peut engendrer, etc..

Ces altérations se caractérisent par exemple par des imperfections en amplitude (manque de précision ou saturation) et/ou dans le domaine dynamique (bande passante limitée en basse et/ou en haute fréquence).

Un exemple d'une telle mesure en environnement sévère concerne la mesure de la pression cylindre dans un moteur thermique dé véhicule automobile.

La mesure d'une telle pression cylindre dans un moteur est un besoin nouveau. Il s'agit alors de mesurer durant les différents cycles du moteur (admission, compression, combustion, échappement), la variation de pression des gaz afin d'optimiser le pilotage de l'injection et l'allumage pour obtenir un meilleur rendement et ainsi diminuer la pollution.

Mais, durant les cycles moteur, la température varie de la température ambiante lorsque le moteur est à l'arrêt, à plusieurs centaines de degrés C, sachant que la flamme dans le cylindre est à environ 1800°C. Or, un certain nombre de matériaux utilisés pour les capteurs ne résistent pas à de telles températures. C'est par exemple le cas des matériaux tels que le silicium, qui sont habituellement utilisés pour de telles mesures de pression.

On a alors proposé d'inclure le capteur de pression cylindre dans une bougie de préchauffage, par exemple pour les moteurs Diesel. La pointe de la bougie se trouve alors dans le haut du cylindre au contact de la flamme. Elle est utilisée comme transducteur pour compresser à l'autre extrémité de la bougie, un capteur qui se trouve dans un environnement tempéré au contact de la culasse du moteur refroidie par circulation d'eau par exemple.

Mais la transduction effectuée par la pointe de la bougie de préchauffage est soumise à une inertie mécanique (masse du transducteur) et, selon les dispositifs utilisés, pose des problèmes d'étanchéité, de même que des problèmes de précision dans les faibles valeurs de pression et/ou est sensible aux vibrations.

Une variante de réalisation de ce montage consiste également à inclure le capteur de pression cylindre dans la bougie de préchauffage, mais diffère de la solution précédente en ce que le dispositif de fixation donne appui au transducteur de pression de part et d'autre de l'épaisseur de la culasse. On mesure alors une déformée de la culasse sous l'effet de la pression.

Mais cette mesure dépend du couple de serrage de la bougie de préchauffage dans la culasse. De plus, elle capte les modes de vibration de la culasse qui se superposent au signal utile. Enfin, le signal mesuré est affecté par la fonction de transfert qui dépend de la culasse et de son environnement.

Une autre solution consiste à utiliser une ou plusieurs fibres optiques pour capter la réflexion d'un rayon lumineux par une membrane soumise à la pression et à la température.

La fibre optique transporte alors cette information en un lieu tempéré où se trouve une électronique d'acquisition et de traitement du signal.

Cependant, la fibre optique a également des limites de tenue en température. La membrane sur laquelle se réfléchit le rayon lumineux détermine la qualité de la mesure. Sa définition doit tenir compte des caractéristiques mécaniques (mode propre de vibration), et thermiques (dilatation déformant la membrane), des problèmes de vieillissement mécanique de la membrane, des problèmes d'oxydation sur sa face réfléchissante, etc..

On assiste par ailleurs à l'émergence de technologies de télécommunication permettant de communiquer des données et/ou de téléalimenter des dispositifs électroniques associés.

Ainsi par exemple, de tels moyens sont utilisés pour la mesure de pression d'un pneumatique.

Il est en effet difficile de faire cheminer des liaisons électriques dans une pièce tournante. Un capteur de pression lié au pneumatique éprouve alors des difficultés à communiquer avec le véhicule en raison de ses déplacements par rapport à celui-ci.

Une solution consiste à inclure un capteur autoalimenté à l'intérieur du pneumatique et un émetteur/récepteur dans le véhicule. Le capteur peut alors communiquer par une liaison radiofréquence avec l'émetteur/récepteur. Dans certains dispositifs, le capteur peut également être téléalimenté par induction ou par radiofréquence.

Une telle structure peut également être utilisée pour assurer une mesure de température dans un four.

En effet, il est difficile de faire cheminer des liaisons électriques dans un environnement trop chaud, les connexions mettant en oeuvre par exemple des brasures, étant sensibles à ce type d'environnement, dans la mesure où par exemple de telles brasures peuvent fondre.

On utilise également dans le domaine de l'industrie automobile, des moyens de communication radiofréquence pour les antivols de véhicules.

Ainsi par exemple, un dispositif d'identification peut être intégré dans une clé de véhicule automobile, ce dispositif ne nécessitant pas d'alimentation pour réduire la maintenance au minimum.

On peut alors inclure dans la clé, un dispositif qui en réponse à un signal radiofréquence, renvoie un signal porteur d'une information spécifique selon la clé. Ce dispositif est alors alimenté grâce à l'énergie du signal électromagnétique reçu.

D'autres exemples utilisant des moyens de communication radiofréquence pour une identification radiofréquence de type RFID, mettent en oeuvre des puces passives ou actives combinant captation d'énergie, processeur, mémoire et communication radiofréquence et se développent à grande échelle pour les identifications.

Le but de l'invention est de proposer une structure de capteur bien adaptée à une utilisation dans un environnement sévère de véhicule automobile.

A cet effet l'invention a pour objet une structure de capteur notamment pour un environnement sévère dans un véhicule automobile, caractérisée en ce qu'elle comporte un corps de capteur comportant à une extrémité, un élément sensible à la grandeur à mesurer dans l'environnement sévère et à une autre extrémité, un circuit de raccordement de celui-ci, placé hors de l'environnement sévère, séparés physiquement l'un de l'autre, raccordés par des moyens de transmission d'informations sans fil et entre lesquels sont prévus des moyens perméables aux informations, de protection du circuit de raccordement à l'encontre de l'environnement.

Suivant d'autres caractéristiques de l'invention :
- les moyens de transmission d'informations comportent en outre des moyens d'alimentation à distance de l'élément sensible, intégrés dans le circuit de raccordement ;
- les moyens de transmission d'informations comprennent des moyens d'émission/réception d'informations par voie radioélectrique ou par couplage électro-magnétique ;
- l'élément sensible est un élément sensible à une pression ;
- l'élément sensible est un élément sensible à une température ;
- l'élément sensible est en matériau piézoélectrique ;
- l'élément sensible est à base de nitrure d'aluminium
- l'élement sensible peut être sensible à d'autres grandeurs physiques ou chimiques (par exemple gaz, vibration, accélération, chocs...);

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure générale et le fonctionnement d'une structure de capteur selon l'invention ;
- la Fig.2 illustre la mise en oeuvre d'une telle structure de capteur en tant que capteur de pression cylindre ;
- la Fig.3 représente de façon plus détaillée une telle structure de capteur ;
- la Fig.4 illustre l'intégration d'une telle structure de capteur dans une bougie de préchauffage ; et
- la Fig.5 illustre la structure et le fonctionnement d'un capteur de pression d'échappement utilisant une structure de capteur selon l'invention.

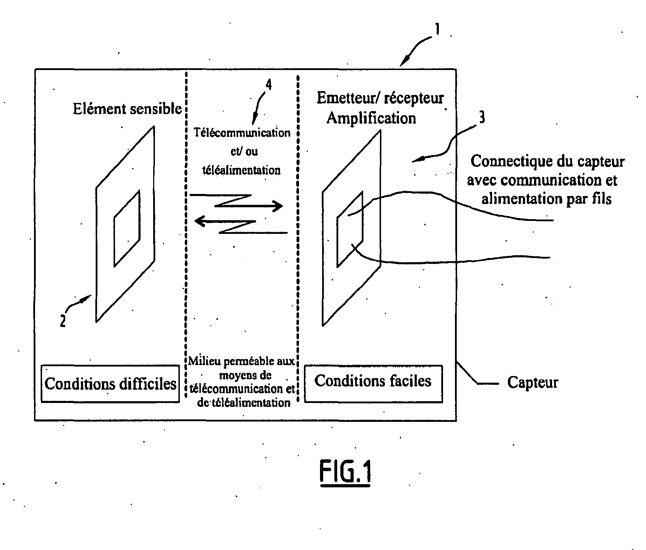

On a en effet illustré sur la figure 1, une structure de capteur notamment pour environnement sévère dans un véhicule automobile.

On sait que de façon schématique, cette structure de capteur comporte un corps de capteur désigné par la référence générale 1 sur cette figure, comportant à une extrémité, un élément sensible à la grandeur à mesurer, cet élément sensible étant désigné par la référence générale 2.

Cet élément sensible est alors placé dans l'environnement sévère.

A l'autre extrémité, ce corps de capteur comporte un circuit de raccordement désigné par la référence générale 3, placé hors de l'environnement sévère et séparé physiquement de l'élément sensible. Par contre, ce circuit 3 est raccordé par des moyens de transmission d'informations sans fil à l'élément sensible 2.

En effet, ce circuit peut par exemple comporter un émetteur/récepteur d'informations voire des moyens d'amplification, permettant de récupérer un signal de l'élément sensible, voire d'alimenter celui-ci.

Dans ce cas, les moyens d'émission/réception d'informations, voire de téléalimentation c'est-à-dire d'alimentation à distance, sont intégrés dans ce circuit par exemple sous la forme d'une puce monobloc sans connexion avec son support.

Entre ce circuit de raccordement 3 et l'élément sensible 2 sont disposés des moyens désignés par la référence générale 4, perméables aux informations et destinés à assurer la protection du circuit de raccordement à l'encontre de l'environnement sévère.

Ainsi par exemple, des moyens d'isolation thermique peuvent être envisagés entre l'élément sensible 2 et le circuit 3, c'est-à-dire entre les deux extrémités du corps de capteur 1, pour assurer la protection du circuit 3.

Un environnement sévère est en fait un environnement dans lequel on cumule en plus de la grandeur à mesurer, une autre grandeur non compatible avec un système électronique de mesure comportant au moins un composant électronique avec des connexions.

Dans un tel environnement, l'électronique et ses connexions constituent habituellement un point faible. Une connexion est en fait un fil ou une nappe faisant contact entre deux pièces.

Une couche de métallisation d'un circuit imprimé n'est pas considérée comme une connexion. Une couche de métallisation d'un circuit intégré (par exemple une puce en micro ou nano technologie) n'est pas considérée non plus comme une connexion

Dans la structure de capteur selon l'invention, on supprime la notion de transducteur, c'est-à-dire d'élément servant à transmettre l'information visée, comme par exemple la pression, jusqu'à un capteur placé dans une zone moins sévère, ce transducteur assurant la mesure comme cela a été expliqué précédemment.

Au contraire, on place l'élément sensible le plus en contact possible avec la grandeur physique à mesurer dans la mesure où le circuit de raccordement peut quant à lui être protégé de l'environnement.

Ainsi, dans l'exemple décrit en regard de la figure 1, le circuit qui sert au raccordement du capteur vers l'extérieur, peut également comporter des moyens d'émission/réception d'informations par exemple par voie radioélectrique ou par couplage électro-magnétique, permettant de récupérer à partir de l'élément sensible, la valeur de la grandeur à mesurer.

Des moyens de téléalimentation de cet élément sensible peuvent également être envisagés de façon classique.

Comme cela a été indiqué précédemment, cet élément sensible peut être un élément sensible à une pression ou à une température.

En fait, cet élément sensible peut par exemple être en matériau piézoélectrique, comme par exemple à base de nitrure d'aluminium AIN.

En effet, l'utilisation d'un tel matériau piézoélectrique dans un élément sensible, résistant à l'environnement sévère, comme par exemple l'AIN résiste à une température élevée, permet de le placer au plus près de la grandeur à mesurer.

On peut alors supprimer les connexions entre l'élément sensible du capteur et son circuit de raccordement et remplacer ces connexions par un dispositif de télécommunication et éventuellement de téléalimentation au sein même du capteur. Une téléalimentation permet alors à l'élément sensible de recevoir l'énergie nécessaire à son fonctionnement.

L'utilisation de moyens de protection du circuit, perméables aux moyens de télécommunication et de téléalimentation entre l'élément sensible et le circuit, permet alors de protéger ce circuit et de le placer dans un environnement sécurisé.

On notera que ces moyens de protection peuvent par exemple être constitués par une couche d'air ou autre.

Les moyens de télécommunication utilisés peuvent par exemple être analogues à ceux déjà utilisés dans les technologies des étiquettes électroniques ou systèmes RFID, dans lesquelles l'étiquette placée sur un objet émet un signal d'identification de cet objet.

Dans le cas de la structure d'un capteur selon l'invention, le signal est de plus porteur d'une mesure de la grandeur.

L'élément sensible 2, par exemple une puce à base de micro ou nano technologie constitue un élément de matière d'un seul bloc qui peut être mis en oeuvre sans connexion.

On conçoit alors que grâce à une telle structure, on peut résoudre les problèmes liés à la température de fusion de brasures de composants, de même que les températures de tenue des liaisons entré les puces électroniques et les pattes de raccordement de celles-ci. De plus, aucune liaison filaire n'étant utilisée, il n'existe plus de problème de tenue en température des câbles et de leurs gaines d'isolement.

Par ailleurs, cette structure permet également de résoudre les problèmes liés aux vibrations, aux chocs et aux mouvements des connexions, à la tenue en température des dispositifs électroniques de mesure, de traitement, d'amplification et d'alimentation et des moyens d'étanchéité entre l'environnement sévère et la partie protégée où doit être acheminée l'information.

En particulier, l'utilisation d'un matériau de type AIN comme matière sensible présente un certain nombre d'avantages notamment au niveau de la tenue en température de celui-ci. Ce matériau possède des propriétés piézoélectriques jusqu'à très haute température, ce qui lui permet d'opérer sans dégradation dans un environnement à très haute température.

On pourra par exemple se reporter au document WO-A2-02/23145 pour la description d'un exemple de capteur utilisant un tel matériau.

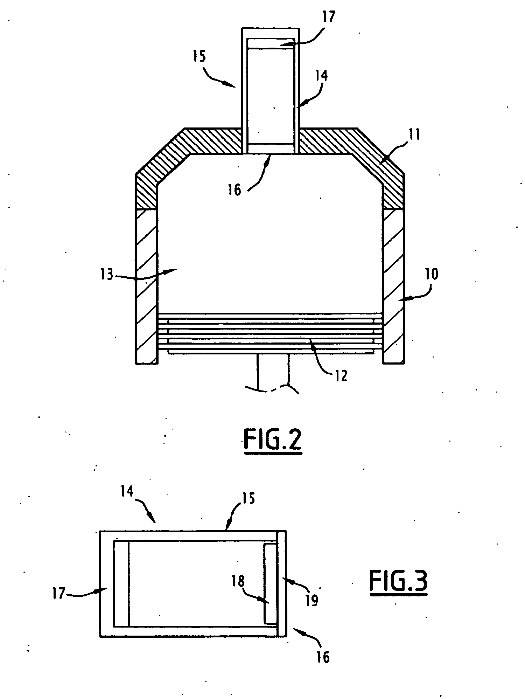

On a illustré sur la figure 2, l'intégration d'une telle structure de capteur dans un capteur de pression cylindre pour un moteur de véhicule automobile.

On reconnaît en effet sur cette figure 2, un bloc moteur 10, une culasse 11, un piston 12, une chambre de combustion 13 et un capteur de pression cylindre désigné par la référence générale 14.

Ce capteur comporte comme cela a été décrit précédemment, un corps de capteur 15 à une extrémité duquel est placé un élément sensible 16 et à l'autre extrémité duquel est placé un circuit de raccordement 17.

Cette structure de capteur est illustrée plus en détail sur la figure 3, où des numéros de références identiques désignent des pièces identiques ou analogues à celles décrites en regard de la figure 2.

C'est ainsi que l'on reconnaît sur cette figure 3, le capteur 14 avec le corps de capteur 15, l'élément sensible 16 et le circuit 17.

Comme expliqué précédemment, l'élément sensible est alors directement en contact avec la chambre de combustion et est soumise à une très forte température et à une très forte pression. Le circuit électronique, c'est-à-dire l'émetteur/récepteur et éventuellement les moyens d'alimentation, est distinct et éloigné de cet élément sensible et bénéficie alors du refroidissement par eau de la culasse du moteur.

Un matériau piézoélectrique tenant à haute température tel que par exemple l'AIN peut être utilisé pour réaliser l'élément sensible du capteur.

Cet élément sensible à base d'AIN est désigné par la référence générale 18 sur la figure 3 et est par exemple placé sur un diaphragme souple 19 se déformant avec la pression.

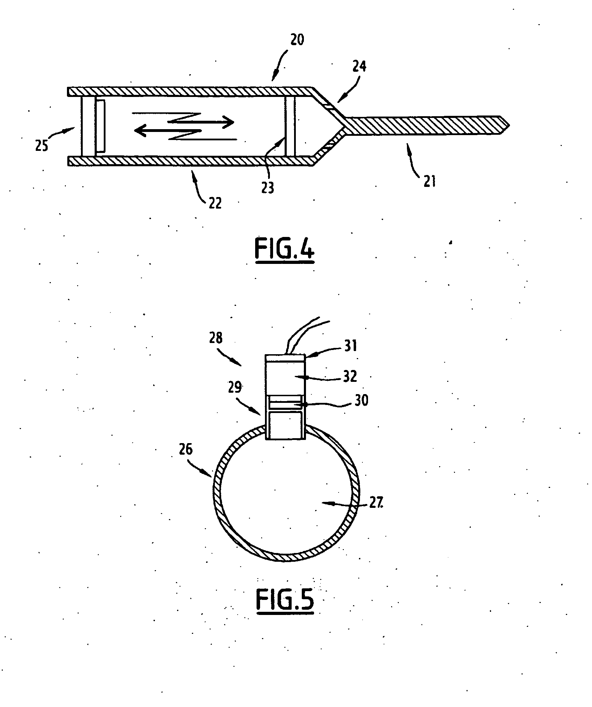

On a illustré sur la figure 4, l'intégration d'un tel capteur dans une bougie de préchauffage de moteur Diesel de véhicule automobile.

La bougie est alors désignée par la référence générale 20 sur cette figure 4 et comporte un élément chauffant désigné par la référence générale 21. Une structure de capteur selon l'invention désignée par la référence générale 22 est également prévue.

Cette structure de capteur comporte de façon classique un élément sensible 23 soumis par exemple à la pression dans la chambre de combustion à travers des orifices de mise en communication prévus dans cette bougie de préchauffage et désignés par la référence générale 24.

Le circuit électronique placé à l'autre extrémité de la bougie est quant à lui désigné par la référence générale 25.

Une autre application d'une telle structure de capteur est illustrée sur la figure 5.

Dans cet exemple, le capteur est un capteur de pression d'échappement.

On reconnaît en effet sur cette figure 5, une conduite de gaz d'échappement désignée par la référence générale 26 dans laquelle circule du gaz d'échappement désigné par la référence générale 27.

Un capteur de pression d'échappement désigné par la référence générale 28 est en communication avec cette conduite et ce capteur comporte de façon classique, un corps de capteur 29 à une extrémité duquel est placé un élément sensible 30 et à l'autre extrémité duquel est placé un circuit de raccordement 31.

Des moyens de protection de ce circuit électronique sont prévus entre l'élément sensible et ce circuit et sont désignés par la référence générale 32.

Ces moyens de protection sont par exemple formés par un isolant thermique.

Il va de soi bien entendu que d'autres modes de réalisation encore peuvent être envisagés.

Ainsi par exemple, il est possible de regrouper plusieurs capteurs sur un même élément sensible comme par exemple un capteur de pression, un capteur de température, etc..

Ceci permet alors de réduire le coût en utilisant un dispositif de télécommunication et/ou de téléalimentation mutualisé.

Ceci permet également par exemple de corriger certaines dérives de l'élément sensible. C'est par exemple le cas pour une combinaison de capteurs de pression et de température, par une correction de la dérive en température.

On peut aussi envisager l'utilisation ou la combinaison avec un capteur sensible à un gaz, pour permettre par exemple la mesure de la richesse en oxygène à l'intérieur de la chambre de combustion.

On peut encore envisager l'utilisation ou la combinaison avec un capteur sensible à une vibration, accélération ou choc, pour permettre par exemple de surveiller le déroulement de la combustion.

Un élément sensible à deux ou plusieurs grandeurs parmi température, pression, gaz, vibration, accélération ou choc, peut régalement être envisagé.

Bien entendu, différents types de dispositifs de télécommunication peuvent être envisagés, comme par exemple par ondes électromagnétiques ou radiofréquences, etc..

De même, des dispositifs de téléalimentation par ondes électromagnétiques ou radiofréquences, etc..., peuvent également être envisagés.

## Revendications

1. Structure de capteur notamment pour un environnement sévère dans un véhicule automobile, **caractérisée en ce qu'**elle comporte un corps de capteur (1 ; 15 ; 22 ; 29) comportant à une extrémité, un élément (2 ; 16 ; 23 ; 30) sensible à la grandeur à mesurer dans l'environnement sévère et à une autre extrémité, un circuit (3 ; 17 ; 25 ; 31) de raccordement de celui-ci, placé hors de l'environnement sévère, séparés physiquement l'un de l'autre, raccordés par des moyens de transmission d'informations sans connexion et entre lesquels sont prévus des moyens (4 ; 32) perméables aux informations, de protection du circuit de raccordement (3) à l'encontre de l'environnement, les moyens de transmission d'informations comportant en outre des moyens d'alimentation à distance de l'élément sensible (2), intégrés dans le circuit de raccordement (3 ; 17 ; 25 ; 31).

2. Structure selon la revendication 1, **caractérisée en ce que** les moyens de transmission d'informations comprennent des moyens d'émission/réception d'informations par voie radioélectrique ou par couplage électro-magnétique.

3. Structure selon l'une quelconque des revendications précédentes, **caractérisée en ce que** l'élément sensible est un élément sensible à une pression.

4. Structure selon l'une quelconque des revendications 1 à 2, **caractérisée en ce que** l'élément sensible est un élément sensible à une température.

5. Structure selon l'une quelconque des revendications 1 à 2, **caractérisée en ce que** l'élément sensible est un élément sensible à un gaz.

6. Structure selon l'une quelconque des revendications 1 à 2, **caractérisée en ce que** l'élément sensible est un élément sensible aux vibrations, accélérations ou chocs.

7. Structure selon l'une quelconque des revendication 1 à 2, **caractérisée en ce que** l'élément sensible est sensible à deux ou plusieurs grandeurs parmi température, pression, gaz, vibration, accélération ou choc.

8. Structure selon l'une quelconque des revendications précédentes, **caractérisée en ce que** l'élément sensible est en matériau piézoélectrique.

9. Structure selon la revendication 5, **caractérisée en ce que** l'élément sensible est à base de nitrure d'aluminium.

## Claims

1. Sensor structure, in particular for a severe environment in a motor vehicle, **characterised in that** it comprises a sensor body (1; 15; 22; 29) having at one end an element (2; 16; 23; 30) sensitive to the quantity to be measured in the severe environment and at another end a circuit (3; 17; 25; 31) for connection thereto, placed outside the severe environment, physically separated from each other, connected by connectionless information transmission means between which there are provided means (4; 32) permeable to the information, for protecting the connection circuit (3) against the environment, the information transmission means also comprising means for the remote supply of the sensitive element (2), integrated in the connection circuit (3; 17; 25; 31).

2. Structure according to claim 1, **characterised in that** the information transmission means comprise means of transmitting/receiving information by radio or by electromagnetic coupling.

3. Structure according to either one of the preceding claims, **characterised in that** the sensitive element is an element sensitive to pressure.

4. Structure according to either one of claims 1 to 2, **characterised in that** the sensitive element is an element sensitive to temperature.

5. Structure according to either one of claims 1 to 2, **characterised in that** the sensitive element is an element sensitive to a gas.

6. Structure according to either one of claims 1 to 2, **characterised in that** the sensitive element is an element sensitive to vibrations, accelerations or shocks.

7. Structure according to either one of claims 1 to 2, **characterised in that** the sensitive element is sensitive to two or more quantities among temperature, pressure, gas, vibration, acceleration or shock.

8. Structure according to any one of the preceding claims, **characterised in that** the sensitive element is made from piezoelectric material.

9. Structure according to claim 5, **characterised in that** the sensitive element is based on aluminium nitride.

## Patentansprüche

1. Sensorstruktur im Speziellen für eine harsche Umgebung in einem Kraftfahrzeug, **dadurch gekennzeichnet, dass** sie ein Sensorgehäuse (1; 15; 22; 29) umfasst, das an einem Ende ein Element (2; 16; 23; 30) umfasst, das empfindlich gegenüber der Messgröße in der harschen Umgebung ist, und das an einem anderen Ende einen Kreis (3; 17; 25; 31) zum Anschließen desselben umfasst, der sich außerhalb der harschen Umgebung befindet, die physisch voneinander getrennt sind, und durch Vorrichtungen zur Informationsübertragung ohne Anschluss miteinander verbunden sind, und zwischen denen Vorrichtungen (4; 32) vorgesehen sind, die für Informationen durchlässig sind, zum Schutz des Anschlusskreises (3) gegenüber der Umgebung, wobei die Vorrichtungen zur Informationsübertragung darüber hinaus Vorrichtungen zur Fernversorgung des empfindlichen Elements (2) umfassen, die in den Anschlusskreis (3; 17; 25; 31) integriert sind.

2. Struktur nach Anspruch 1, **dadurch gekennzeichnet, dass** die Vorrichtungen zur Informationsübertragung Vorrichtungen zum Senden / Empfangen von Informationen über den Funkweg oder über elektromagnetische Kopplung umfassen.

3. Struktur nach irgendeinem der vorherigen Ansprüche, **dadurch gekennzeichnet, dass** das empfindliche Element ein druckempfindliches Element ist.

4. Struktur nach irgendeinem der Ansprüche 1 bis 2, **dadurch gekennzeichnet, dass** das empfindliche Element ein temperaturempfindliches Element ist.

5. Struktur nach irgendeinem der Ansprüche 1 bis 2, **dadurch gekennzeichnet, dass** das empfindliche Element ein gasempfindliches Element ist.

6. Struktur nach irgendeinem der Ansprüche 1 bis 2, **dadurch gekennzeichnet, dass** das empfindliche Element ein schwingungs-, beschleunigungs- oder stoßempfindliches Element ist.

7. Struktur nach irgendeinem der Ansprüche 1 bis 2, **dadurch gekennzeichnet, dass** das empfindliche Element empfindlich gegenüber zwei oder mehr Größen wie Temperatur, Druck, Gas, Schwingungen, Beschleunigung oder Stöße ist.

8. Struktur nach irgendeinem der vorherigen Ansprüche, **dadurch gekennzeichnet, dass** das empfindliche Element aus einem piezoelektrischen Material gefertigt ist.

9. Struktur nach Anspruch 5, **dadurch gekennzeichnet, dass** das empfindliche Element auf Aluminium-Nitrid basiert.
